# EUROPÄISCHE PATENTANMELDUNG

(11) **EP 1 431 074 A2**
(43) Veröffentlichungstag der Anmeldung: **23.06.2004**
(21) Anmeldenummer: 03026481.6
(22) Anmeldetag: 20.11.2003
(51) Int. Cl.: B60B 39/12

(54) **Rutschhemmende Auflage für einen natürlichen Untergrund**

(30) Priorität: 20.12.2002 DE 10261228
(71) Anmelder: Interplast Kunststoffe GmbH, 72221 Haiterbach (DE)
(72) Erfinder: Hartl, Hermann, 72221 Haiterbach (DE); Saathoff, Werner, 78351 Bodmann-Ludwigshafen (DE)
(74) Vertreter: Maser, Jochen, Dipl.-Ing.

(57) **Zusammenfassung**

Die Erfindung betrifft eine rutschhemmende Auflage (11) für einen natürlichen Untergrund, welche als Anfahrhilfe dient.

## Beschreibung

Die Erfindung betrifft eine rutschhemmende Auflage für einen natürlichen Untergrund.

Derartige rutschhemmende Auflagen sind unter anderem als Anfahrhilfe für Kraftfahrzeuge bekannt. Aus der Druckschrift G 87 04 347.5 ist eine Gummimatte als Anfahrhilfe für Kraftfahrzeuge bekannt geworden. Diese Gummimatte weist eine Gewebematte auf, an der aus der Unterseite herausragende Metallspikes befestigt sind. Die Oberfläche ist profiliert ausgebildet. Derartige Anfahrhilfen sind in der Herstellung aufwendig. Darüber hinaus ist bei derartigen Anfahrhilfen mit Metallspikes eine Verletzungsgefahr gegeben.

Eine ähnliche Anfahrhilfe ist aus der Druckschrift G 88 14 521.2 bekannt geworden. Diese Anfahrhilfe weist in großen Abständen zueinander auf der Unterseite Spikes und korrespondierend auf der Oberseite U-förmige Auflagen auf, um einen Angriff für die Räder eines Kfzs zu bilden. Diese Anfahrhilfe weist durch den großen Abstand der U-förmigen Schienen, welche auf der Matte angeordnet sind, den Nachteil auf, dass die Reifen zwischendrin durchdrehen können.

Aus der DE 198 06 511 C2 ist des weiteren eine Anfahrhilfe bekannt geworden, welche Mittel zum Verändern der Dicke der Matte in Form einer oder mehrerer mit einem flüssigen oder gasförmigen Medium füllbaren Kammer vorgesehen sind, mit denen die Dicke der Matte zumindest abschnittsweise veränderbar ist, um Bodenunebenheiten auszugleichen. Diese Anfahrhilfe weist neben der kostenintensiven Herstellung auch eine komplizierte Bedienung auf.

Der Erfindung liegt deshalb die Aufgabe zugrunde, eine rutschhemmende Auflage für einen natürlichen Untergrund zu schaffen, welche einfach und kostengünstig in der Herstellung ist und eine leichte Handhabung ermöglicht.

Diese Aufgabe wird erfindungsgemäß durch eine rutschhemmende Auflage für einen natürlichen Untergrund gelöst, welche aus wenigstens einem plattenförmigen Grundkörper besteht, der zumindest einseitig aus einer mittleren Ebene des Grundkörpers hervorstehende Vorsprünge aufweist. Durch diese Ausgestaltung ist eine einfache Herstellung gegeben, welche beispielsweise durch ein kontinuierliches Verfahren ermöglicht ist. Des weiteren greifen die Vorsprünge in den natürlichen Untergrund ein und verankern sich mit dem Untergrund unter Belastung. Eine derartige Belastung ist beim Einsatz der rutschhemmenden Auflage als Anfahrhilfe gegeben. Ebenso kann eine Belastung gegeben sein, sofern die rutschhemmende Auflage auf einen natürlichen Untergrund als Boden für Zelte, Überdachungen oder dergleichen eingesetzt wird. Ebenso kann diese rutschhemmende Auflage auch als provisorischer Weg, Zugang oder Zufahrt ausgebildet sein, um auf einem noch nicht fertiggestellten natürlichen Untergrund beispielsweise einer Baustellenzufahrt oder einen Zugang für einen Hauseingang oder dergleichen zu ermöglichen.

Die rutschhemmende Auflage weist vorteilhafterweise beidseitig aus einer mittleren Ebene hervorstehende Vorsprünge auf. Diese Ausgestaltung weist den Vorteil auf, dass das Eingreifen der nach unten zum natürlichen Untergrund weisenden Ursprünge durch die mittlere Auflage begrenzt ist. Gleichzeitig ist durch die gegenüber der mittleren Ebene nach oben hervorstehenden Vorsprünge der Vorteil gegeben, dass eine große Angriffsfläche als Auflage gegeben ist. Des weiteren ermöglichen die nach oben zum Fahrzeugreifen weisenden Vorsprünge ein zumindest teilweises Eingreifen in das Profil des Reifens, wodurch eine Verbesserung der Haftung erzielt wird. Zwischen den Vorsprüngen sind vorteilhafterweise Zwischenräume vorgesehen, welche die Aufnahme von losem natürlichen Untergrund ermöglichen, ohne dass die Angriffsfläche aufgrund der hervorstehenden Vorsprünge beeinträchtigt wird. Beispielsweise bei der Verwendung der rutschhemmenden Auflage als Anfahrhilfe bei Schnee- und Eisglätte ist ermöglicht, dass die in dem Profil eines Reifens mitgeführten Schneereste von den Zwischenräumen zwischen den Vorsprüngen aufgenommen werden können, ohne dass die Vorsprünge ihre Wirkung als Angriffsfläche verlieren.

Nach einer weiteren vorteilhaften Ausgestaltung der Erfindung ist vorgesehen, dass ein thermoplastisches Material zur Herstellung der Auflage vorgesehen ist. Dadurch kann beispielsweise in einem Inlineverfahren in kostengünstiger Weise die rutschhemmende Auflage mit ein- oder beidseitig der mittleren Ebene angeordneten Vorsprüngen hergestellt werden. In einem kontinuierlichen Prozess kann ein plattenförmiges Material einer Positiv- und Negativwalze zugeführt werden, wodurch die Vorsprünge durch Verformen des plattenförmigen Grundkörpers ermöglicht ist. Die Ausbildung des Grundkörpers aus thermoplastischem Material weist des weiteren den Vorteil auf, dass die rutschhemmende Auflage sehr leicht auch bei größeren Flächen ausgebildet ist, wodurch deren Handhabung vereinfacht ist.

Nach einer weiteren vorteilhaften Ausgestaltung der Erfindung ist vorgesehen, dass die Vorsprünge noppenförmig ausgebildet sind. Dadurch kann eine hinreichende Auflagefläche einerseits und Angriffsfläche andererseits erzielt werden. Derartige Auflagen sind auch platzsparend stapelbar.

In einer bevorzugten Ausführungsform ist vorgesehen, dass die noppenförmigen Vorsprünge eine im wesentlichen parallel zur mittleren Ebene verlaufende Auflagefläche aufweisen. Diese Noppen können vorteilhafterweise kegelförmig, pyramidenförmig, säulenförmig oder mit unterschiedlicher Grundgeometrie als auch kegelstumpfförmig oder pyramidenstumpfförmig ausgebildet sein. Eine Abflachung der Vorsprünge ist bevorzugt beim Einsatz als Boden in einem Zelt vorgesehen, um eine bequeme Standfläche zu bilden. Gleichzeitig kann eine hinreichende Angriffsfläche eines Antriebsrades bei der Verwendung als Anfahrhilfe gegeben sein. Die Abflachung selbst kann eben ausgebildet sein oder zumindest eine weitere Vertiefung oder Erhöhung aufweisen, deren Geometrie variabel ausgebildet sein kann.

Nach einer weiteren vorteilhaften Ausgestaltung der Erfindung ist vorgesehen, dass die Vorsprünge des Grundkörpers eine Hinterschneidung aufweisen. Diese bevorzugte Ausführungsform findet insbesondere dann Verwendung, wenn ein länger andauernder Einsatz vorgesehen ist, um eine erhöhte Verankerung mit dem natürlichen Untergrund zu bilden. Auf der zum Untergrund weisenden Seite können ebene Auflageflächen der Vorsprünge ausgebildet sein und auf der gegenüberliegenden Fläche können die Auflageflächen zusätzliche hervorstehende Vorsprünge in einer alternativen Ausführungsform aufweisen, die einen Eingriff in das Profil des Reifens und somit die Haftung erhöhen.

Nach einer weiteren vorteilhaften Ausgestaltung der Erfindung ist vorgesehen, dass zumindest ein Randbereich eines ersten Grundkörpers mit wenigstens teilweise einem Randbereich von zumindest einem weiteren Grundkörper verbindbar ist. Dadurch wird ermöglicht, dass mehrere Grundkörper zu einer größeren Auflagefläche zusammengesetzt werden können und in Abhängigkeit der Anordnung und der Verwendung von unterschiedlichen geometrischen Flächen der Auflage an unterschiedliche Anforderungen angepassten Flächen gebildet werden können. Beispielsweise kann als Anfahrhilfe eine streifenförmige Anordnung von mehreren hintereinanderliegenden Grundkörpern gegeben sein. Zur Ausbildung einer Auflagefläche wie beispielsweise ein Zeltboden, welche eine Abgrenzung zum natürlichen Untergrund bilden soll, können jegliche rechteckförmige, quadratische oder an die benötigte Fläche angepasste geometrische Flächen ausgebildet und zusammengesetzt werden.

Vorteilhafterweise ist vorgesehen, dass die Vorsprünge zumindest im Randbereich derart ausgebildet sind, dass diese ineinander greifen, um eine im wesentlichen geschlossene Fläche zu bilden. In einer vorteilhaften Weiterbildung sind keine weiteren Hilfsmittel erforderlich, um die zueinander benachbarten Grundkörper durch das Ineinandergreifen der Vorsprünge zu fixieren, da diese ineinander greifende oder rastende Halteelemente aufweisen.

In einer bevorzugten Ausführungsform als Anfahrhilfe ist die rutschhemmende Auflage als streifenförmige Auflage vorgesehen, deren Breite zumindest einer Reifenbreite entspricht und wenigstens 1 m lang ausgebildet ist. Dadurch kann eine leicht zu transportierende und gut handhabbare Anfahrhilfe vorgesehen sein.

In einer alternativen Ausführungsform der rutschhemmenden Auflage als Anfahrhilfe ist vorgesehen, dass die Anfahrhilfe aufrollbar ist oder in reg elmäßigen Abständen zueinander einen Faltbereich aufweist, um die Auflage auf ein kleines Packmaß zusammenzulegen. Dadurch kann die Anfahrtshilfe ohne großen Platzbedarf im Fahrzeug untergebracht und mittransportiert werden.

Nach einer weiteren vorteilhaften Ausgestaltung der Erfindung ist vorgesehen, dass an einem Randbereich des Grundkörpers Halterungen vorgesehen sind, welche vorteilhafterweise zur Aufnahme von Verankerungselementen vorgesehen sind. Diese Halterungen können in Form von Öffnungen, Ösen oder dergleichen ausgebildet sein, um Spieße zur Befestigung der Auflage auf dem natürlichen Untergrund anzubringen. Diese dienen zur sicheren Positionierung der Auflagen in der gewünschten Position.

Die Erfindung sowie weitere vorteilhafte Ausführungsformen und Weiterbildungen derselben werden im folgenden anhand den in der Zeichnung dargestellten Beispielen näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: einen schematische Draufsicht auf eine erfindungsgemäße Vorrichtung,
- Figur 2: einen schematischen Querschnitt entlang der Linie A-A in Figur 1,
- Figur 3: eine schematische Draufsicht auf eine erfindungsgemäße Vorrichtung als Anfahrhilfe,
- Figur 4: eine schematische Ansicht im Querschnitt einer alternativen Ausführungsform zu Figur 1,
- Figur 5: eine schematische Ansicht im Querschnitt einer weiteren alternativen Ausführungsform zu Figur 1 und
- Figur 6: eine schematische Draufsicht der alternativen Ausführungsform gemäß Figur 5.

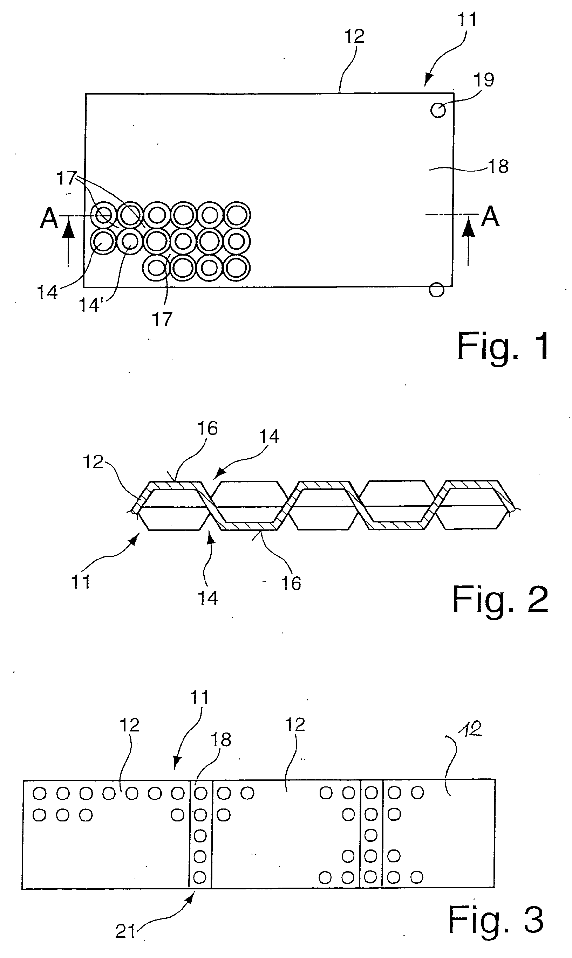

In den Figuren 1 und 2 ist eine Auflage 11 dargestellt. Diese Auflage 11 weist einen Grundkörper 12 auf, in dem ausgehend von einer mittleren Ebene 13 in regelmäßigen Abständen nach oben und unten Vorsprünge 14 vorgesehen sind. Diese Vorsprünge 14 sind noppenförmig ausgebildet und weisen parallel zur mittleren Ebene 13 verlaufend Auflageflächen 16 auf. Zwischen den Vorsprüngen 14 bzw. im Übergangsbereich zwischen einem nach oben und nach unten gegenüber der mittleren Ebene 13 hervortretenden Vorsprünge sind Stege 17 vorgesehen. Alternativ kann auch ein direkter Übergang vorgesehen sein.

Die Auflage 11 ist bevorzugt aus einem thermoplastischen Kunststoff hergestellt, welcher beispielsweise in plattenförmigem Material angeliefert und durch Thermoverformung in die Gestalt gemäß den Figuren 1 und 2 übergeführt wird. Dies kann beispielsweise in einem Inlineverfahren erfolgen. Durch den kontinuierlichen Prozess ist eine kostengünstige Herstellung ermöglicht. In Abhängigkeit des Anwendungsfalles erfolgt der Zuschnitt der einzelnen Auflagen, und die Auswahl des thermoplastischen Kunststoffes ist an die Verwendung angepasst. Bei der Verwendung der rutschhemmenden Auflage als Anfahrhilfe ist bevorzugt ein Thermoplast vorgesehen, der eine hohe Steifigkeit aufweist, schlagzäh ist und in einem hohen Temperaturbereich widerstandsfähig ist.

In einer bevorzugten Ausführungsform kann vorgesehen sein, dass auf einer Fläche des Grundkörpers 12 eine Beschichtung aufgebracht ist. Beispielsweise kann eine aus elastomerem Material bestehende Beschichtung zur Haftverbesserung aufkaschiert sein. Des weiteren kann vorgesehen sein, dass eine flüssige Beschichtung aufgebracht wird, welche Partikel, wie beispielsweise Quarzsand oder dergleichen umfasst, um die Oberflächenrauhigkeit zu erhöhen. Diese Beschichtungen können wahlweise auf einer oder beiden Seiten vorgesehen sein. Ebenso können auf einer zum Untergrund weisenden Seite an den Vorsprüngen ein Gewebe oder dergleichen vorgesehen, aufgeklebt oder aufkaschiert sein. Durch dieses Gewebe kann der matschige oder teilweise lose Untergrund hindurchdringen, wodurch eine erhöhte Verankerung erzielbar ist.

In einer alternativen Ausführungsform gemäß den Figuren 1 und 2 kann vorgesehen sein, dass die Auflageflächen 16 zusätzlich Bohrungen aufweisen. Die Randbereiche dieser Bohrungen können vorteilhafterweise nach außen stehende Randöffnungsbereiche aufweisen, um die Haftung zusätzlich zu erhöhen.

Die rutschhemmende Auflagefläche 11 kann des weiteren einen Schichtaufbau aus mehreren Komponenten aufweisen. Beispielsweise kann ein Gewebe aus Fasern, Metall oder dergleichen im Kern des thermoplastischen Materials vorgesehen sein. Alternativ ist auch ein Sandwichaufbau ermöglicht, bei dem zwei oder mehrere Schichten zu einer Auflage 11 verbunden sind, welche aus gleichem oder unterschiedlichem Material bestehen können. Diese Schichten können ebenfalls in einem Inlineverfahren oder einem Bedampfungs-Beschichtungsprozess oder dergleichen vorgesehen sein. Beispielsweise kann auf eine Auflage aus thermoplastischem Material eine metallische, nichtmetallische oder aus einer Aluminiumlegierung bestehende Lochplatte oder geprägte Platte aufgesetzt sein, welche die Fahrfläche verstärkt, die Haftreibung erhöht und/oder vor erhöhter Abnutzung schützt.

Bei der in Figur 1 dargestellten Auflage 11 ist im Randbereich 18 ein Halteelement 19 vorgesehen. Dieses Halteelement 19 ist beispielsweise als Öffnung ausgebildet und dient zum Anbringen eines Seiles oder eines Hakens zum Fixieren der Auflage 11 in der gewünschten Position. Ebenso kann vorgesehen sein, dass ein Erdspieß oder Haken unmittelbar in diese Halterung 19 gesetzt wird, um diese Auflage 11 auf dem Untergrund zu fixieren.

Unter dem natürlichen Untergrund sind beispielsweise Schnee, Sand, Morast, aufgeweichter und matschiger Erdboden, Wiesen oder dergleichen zu verstehen.

In Figur 3 ist die Auflage 11 als Anfahrhilfe dargestellt. Beispielsweise sind drei Grundkörper 12 in Reihe hintereinander positioniert und bilden eine streifenförmige Anordnung. Die Grundkörper 12 sind im Randbereich 18 überlappend angeordnet. Die Vorsprünge 14 der aneinandergrenzenden Grundkörper 12 greifen im Überlappungsbereich 21 ineinander, so dass eine durchgehende streifenförmige Auflage 11 gegeben ist. Zusätzlich können Klammern am Überlappungsbereich 21 angeordnet sein, um die Fixierung zu sichern. Durch den modularen Aufbau und die Aneinanderreihung von mehreren Grundkörpern 12 kann in einfacher Weise die gewünschte Länge der streifenförmigen Auflage 11 ausgewählt werden.

Alternativ zu der in Figur 3 dargestellten Ausführungsform können die Grundkörper 12 auch zu einem Zeltboden oder dergleichen zusammengesetzt werden, so dass beispielsweise bei einem Aufbau eines Zeltes auf sandigem, morastigem oder schnell durchweichendem Boden eine rutschsichere Abdeckung ermöglicht ist. Die Grundkörper 12 können im Halbverband oder Drittelverband oder dergleichen zueinander positioniert werden, wobei zusätzlich Verankerungen an Seitenflächen vorgesehen sein können.

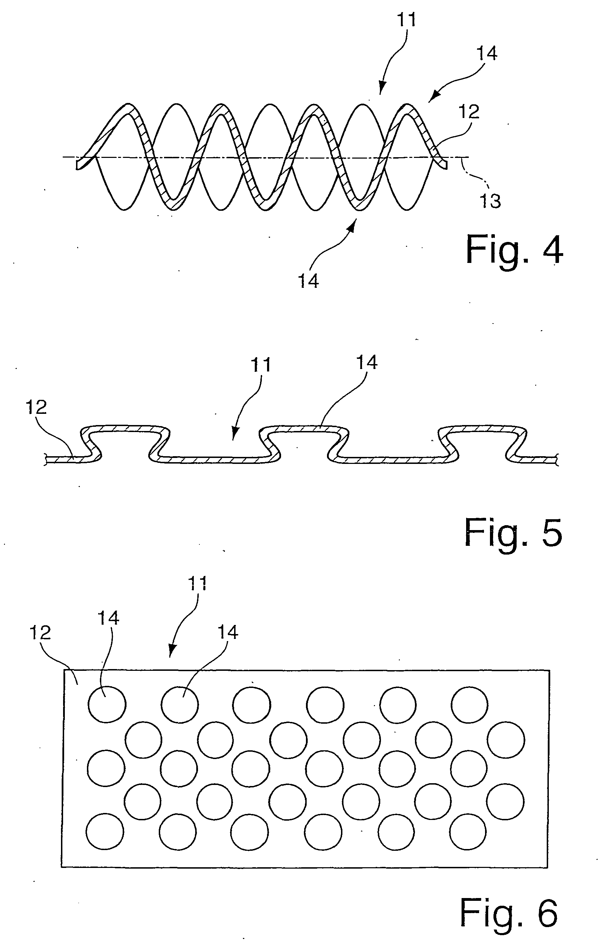

In Figur 4 ist eine alternative Ausführungsform zu Figur 1 und 2 dargestellt. Diese Vorsprünge 14 sind kegelförmig ausgebildet. Bei dieser Ausführungsform ist die Verzahnung mit dem Untergrund und den Reifen erhöht.

Eine weitere alternative Ausgestaltung der Erfindung ist in den Figuren 5 und 6 dargestellt. Der Grundkörper 12 weist einseitig hervorstehende Vorsprünge 14 auf, welche eine Hinterschneidung aufweisen. Diese Hinterschneidungen ermöglichen ebenfalls einen Eingriff und eine Verzahnung mit dem natürlichen Untergrund, so dass die Auflage gegenüber dem Untergrund ortsfest positionierbar ist und eine hinreichende Angriffsfläche auf deren Oberseite bildet.

Die rutschhemmende Auflage 11 gemäß den in den Figuren 1 bis 6 dargestellten Ausführungsbeispielen ist bevorzugt für die Verwendung als Anfahrhilfe vorgesehen, jedoch hierauf nicht beschränkt.

## Patentansprüche

1. Rutschhemmende Auflage für einen natürlichen Untergrund, bestehend aus wenigstens einem plattenförmigen Grundkörper (12), welcher zumindest einseitig aus einer mittleren Ebene (13) des Grundkörpers (12) hervorstehende Vorsprünge (14) aufweist.

2. Auflage nach Anspruch 1, **dadurch gekennzeichnet, dass** beidseitig aus einer mittleren Ebene (13) hervorstehende Vorsprünge (14) vorgesehen sind.

3. Auflage nach Anspruch 1 oder 2, **dadurch gekennzeichnet, dass** die Vorsprünge (14) noppenförmig ausgebildet sind.

4. Auflage nach Anspruch 3, **dadurch gekennzeichnet, dass** die noppenförmigen Vorsprünge (14) eine im wesentlichen parallel zur mittleren Ebene (13) verlaufende Auflagefläche (16) aufweisen.

5. Auflage nach einem der vorhergehenden Ansprüche, **dadurch gekennzeichnet, dass** die Vorsprünge (14) kegelförmig, pyramidenförmig, hutförmig, zuckerhutförmig, kegelstumpfförmig, pyramidenstumpfförmig, rechteckförmig oder quadratisch ausgebildet sind.

6. Auflage nach Anspruch 1, **dadurch gekennzeichnet, dass** die Vorsprünge (14) Hinterschneidungen aufweisen.

7. Auflage nach einem der vorhergehenden Ansprüche, **dadurch gekennzeichnet, dass** der Grundkörper (12) aus einem thermoplastischen Material hergestellt ist, welches vorzugsweise mit Zusätzen zur Erhöhung der Formfestigkeit gegen Abnutzung versehen ist.

8. Auflage nach einem der vorhergehenden Ansprüche, **dadurch gekennzeichnet, dass** auf einer Seite des Grundkörpers (12) zumindest teilweise eine Beschichtung aufgebracht ist.

9. Auflage nach einem der vorhergehenden Ansprüche, **dadurch gekennzeichnet, dass** zumindest ein Randbereich (18) eines ersten Grundkörpers (12) wenigstens teilweise mit einem weiteren Randbereich (18) von zumindest einem weiteren Grundkörper (12) verbindbar ist.

10. Auflage nach Anspruch 9, **dadurch gekennzeichnet, dass** die Vorsprünge (14) im Randbereich (18) ineinandergreifend angeordnet sind.

11. Auflage nach einem der vorhergehenden Ansprüche, **dadurch gekennzeichnet, dass** eine streifenförmige Anordnung als Anfahrhilfe der Grundkörper (12) vorgesehen ist und der Grundkörper (12) wenigstens eine Reifenbreite eines Kraftfahrzeugs umfasst und eine Länge von wenigstens einem Meter aufweist.

12. Auflage nach einem der vorhergehenden Ansprüche, **dadurch gekennzeichnet, dass** der Grundkörper (12) als streifenförmige Auflage ausgebildet ist, die aufrollbar oder durch Faltbereiche zusammenlegbar ist.

13. Auflage nach einem der vorhergehenden Ansprüche, **dadurch gekennzeichnet, dass** an einem Randbereich (18) des Grundkörpers (12) zumindest eine Halterung (18) zur Aufnahme von Verankerungselementen vorgesehen ist.

14. Auflage nach einem der vorhergehenden Ansprüche, **dadurch gekennzeichnet, dass** der Grundkörper (12) einen Sandwichaufbau aus wenigstens zwei Komponenten aufweist.

15. Auflage nach einem der vorhergehenden Ansprüche, **dadurch gekennzeichnet, dass** die Vorsprünge (14) durch Thermoverformung des plattenförmigen Grundkörpers (12) hergestellt sind.
